# EUROPEAN PATENT SPECIFICATION

(11) **EP 2 317 818 B1**
(45) Date of publication and mention of the grant of the patent: **31.01.2018**
(21) Application number: 10180882.2
(22) Date of filing: 07.03.2005
(51) Int. Cl.: H04W 72/12, H04W 36/08, H04W 28/14, H04W 72/04

(54) **WIRELESS COMMUNICATION METHOD AND APPARATUS FOR REPORTING TRAFFIC VOLUME MEASUREMENT INFORMATION TO SUPPORT UPLINK DATA TRANSMISSIONS**
VERFAHREN UND VORRICHTUNG ZUR DRAHTLOSEN KOMMUNIKATION ZUM MELDEN VON VERKEHRSVOLUMEN-MESSINFORMATIONEN ZUR UNTERSTÜTZUNG VON AUFWÄRTSSTRECKEN-DATENÜBERTRAGUNGEN
PROCEDE ET APPAREIL DE COMMUNICATION SANS FIL PERMETTANT DE COMMUNIQUER DES INFORMATIONS DE MESURE DE VOLUME DE TRAFIC DESTINEES A SOUTENIR DES TRANSMISSIONS DE DONNEES MONTANTES

(30) Priority: 31.03.2004 US 557974 P; 29.09.2004 US 953375
(43) Date of publication of application: 04.05.2011
(62) Divisional of application: 05724788.4
(73) Proprietor: InterDigital Technology Corporation, Wilmington, DE 19809 (US)
(72) Inventor: Zhang, Guodong, Syosset, NY 11791 (US); Terry, Stephen E., Northport, NY 11768 (US); Dick, Stephen G., Nesconset, NY 11767 (US)
(74) Representative: Awapatent AB

(56) References cited:
- EP-A1- 1 257 140
- EP-A2- 0 887 948
- US-A1- 2002 093 953
- US-A1- 2003 219 037
- US-B1- 6 640 105
- UNKNOWN: "3rd Generation Partnership Project; Technical Specification Group Radio Access Network; Feasibility Study for Enhanced Uplink for UTRA FDD; (Release 6)", 3GPP TR 25.896 V1.1.0, [Online] 30 November 2003 (2003-11-30), pages 1-44, XP002422563, 3GPP650 Route des Lucioles - Sophia Antipolis,Valbonne, FRANCE Retrieved from the Internet: URL:http://www.3gpp.org/ftp/tsg_ran/WG1_RL 1/TSGR1_35/Docs/Zips/R1-031358.zip> [retrieved on 2007-02-28]
- SAMSUNG: "TP on uplink signalling of scheduling information update", TDOC R1-031439, [Online] 21 November 2003 (2003-11-21), pages 1-2, XP002422554, 3GPP TSG-RAN WG1 #35 Meeting, Lisbon, Portugal Retrieved from the Internet: URL:http://www.3gpp.org/ftp/tsg_ran/WG1_RL 1/TSGR1_35/Docs/Zips/R1-031439.zip> [retrieved on 2007-02-28]
- QUALCOMM EUROPE: "Reference Node-B scheduler for EUL", R1-031246, [Online] 21 November 2003 (2003-11-21), pages 1-5, XP002422555, 3GPP TSG-RAN WG1 #35 Meeting, Lisbon, Portugal Retrieved from the Internet: URL:http://www.3gpp.org/ftp/tsg_ran/WG1_RL 1/TSGR1_35/Docs/Zips/R1-031246.zip> [retrieved on 2007-02-28]

## Description

### FIELD OF INVENTION

The present invention is related to a wireless communication system including a wireless transmit/receive unit (WTRU) and a Node-B. More particularly, the present invention is related to reporting enhanced uplink (EU) traffic volume measurement (TVM) information to support EU data transmissions between the WTRU and the Node-B over a signaling channel having a limited capacity.

### BACKGROUND

Methods for enhancing uplink (UL) coverage, throughput and transmission latency in a wireless communication system, such as a frequency division duplex (FDD) system, are currently being investigated in release 6 (R6) of the third generation partnership project (3GPP). Instead of scheduling and assigning uplink physical channels in a radio network controller (RNC), a Node-B (i.e., base station) controller is used such that more efficient decisions can be made and uplink radio resources can be managed on a short-term basis better than the RNC, even if the RNC retains overall control of the system. A similar approach has already been adopted in the downlink for release 5 (R5) of high speed data packet access (HSDPA) in a universal mobile telecommunications system (UMTS) for both an FDD mode and a time division duplex (TDD) mode.

In order for the Node-B to make efficient allocation decisions and prioritize between different priority flows, the Node-B must keep track of TVMs along with the associated priority. However, conventional UL signaling methods have limited capacity, and thus may not be able to accommodate the reporting of TVMs along with their associated priorities.

Reference is made to 3GPP TR 25.896 V1.1.0 of 30 November 2003, EP 0 887 948 A2 of 30 December 1998, US 6 640 105 B1 of 28 October 2003, EP 1 257 140 A1 of 13 November 2002, "TP on uplink signalling of scheduling information update" Tdoc R1-031439 3GPP TSG-RAN WG1 #35 meeting 21 November 2003, "Reference Node-B scheduler for EUL" Tdoc R1-031246 3GPP TSG-RAN WG1 #35 meeting 21 November 2003, US 2002/093953 A1 of 18 July 2002, and US 2003/219037 A1 of 27 November 2003.

### SUMMERY

The present invention is a wireless communication method Node B and a WTRU according to the independent claims. EU data is generated and stored in a buffer of the WTRU. The WTRU transmits an initial TVM information request message to the Node-B indicating that the WTRU has EU data to transfer to the Node-B. In response to receiving the initial TVM information request message, the Node-B schedules one or more allowed EU data transmissions between the WTRU and the Node-B by transmitting an EU data scheduling message to the WTRU.

The WTRU transfers all of the EU data stored in the buffer to the Node-B if the allowed EU data transmissions are sufficient to support transmission of all of the EU data stored in the buffer. Otherwise, the WTRU may transmit detailed TVM information multiplexed with at least a portion of the EU data to the Node-B.

The TVM information may indicate the quantity of the stored EU data. The detailed TVM information may indicate a quantity of buffered EU data associated with each of a plurality of traffic priority classes. The detailed TVM information may be multiplexed at a layer 2 medium access control (MAC) entity, or at a layer 3 radio resource control (RRC) or other equivalent layer 3 signaling entity.

The procedure used to transfer EU data stored in the buffer of the WTRU may be dependent upon whether or not the quantity of the EU data exceeds an established threshold. The initial TVM information request message may be transmitted to the Node-B only after the quantity of the stored EU data exceeds the established threshold. When the established threshold is not exceeded, the WTRU may transfer all of the EU data from the buffer of the WTRU to the Node-B without requiring scheduling information from the Node-B. If the established threshold is set to zero, the WTRU may transfer the stored EU data from the buffer of the WTRU to the Node-B only after receiving scheduling information from the Node-B.

### BRIEF DESCRIPTION OF THE DRAWING(S)

A more detailed understanding of the invention may be had from the following description of a preferred example, given by way of example and to be understood in conjunction with the accompanying drawing wherein:
Figure 1 shows a wireless communication system operating in accordance with the present invention;
Figure 2 is a signal flow diagram for the system of Figure 1 when more than one EU transmission is necessary to transmit all of the EU data buffered in the WTRU;
Figure 3 is a signal flow diagram for the system of Figure 1 when only one EU transmission is necessary to transmit all of the EU data buffered in the WTRU; and
Figure 4 is a flowchart of a process including method steps for implementing the reporting of TVMs in accordance with the present invention.

### DETAILED DESCRIPTION OF THE PREFERRED EMBODIMENT(S)

Hereafter, the terminology "WTRU" includes but is not limited to a user equipment (UE), mobile station, fixed or mobile subscriber unit, pager, or any other type of device capable of operating in a wireless environment.

When referred to hereafter, the terminology "Node-B" includes but is not limited to a base station, site controller, access point or any other type of interfacing device in a wireless environment.

The present invention may be further applicable to TDD, FDD, and time division synchronous code division multiple access (TD-SCDMA), as applied to UMTS, CDMA 2000 and CDMA in general, but is envisaged to be applicable to other wireless systems as well.

The features of the present invention may be incorporated into an IC or be configured in a circuit comprising a multitude of interconnecting components.

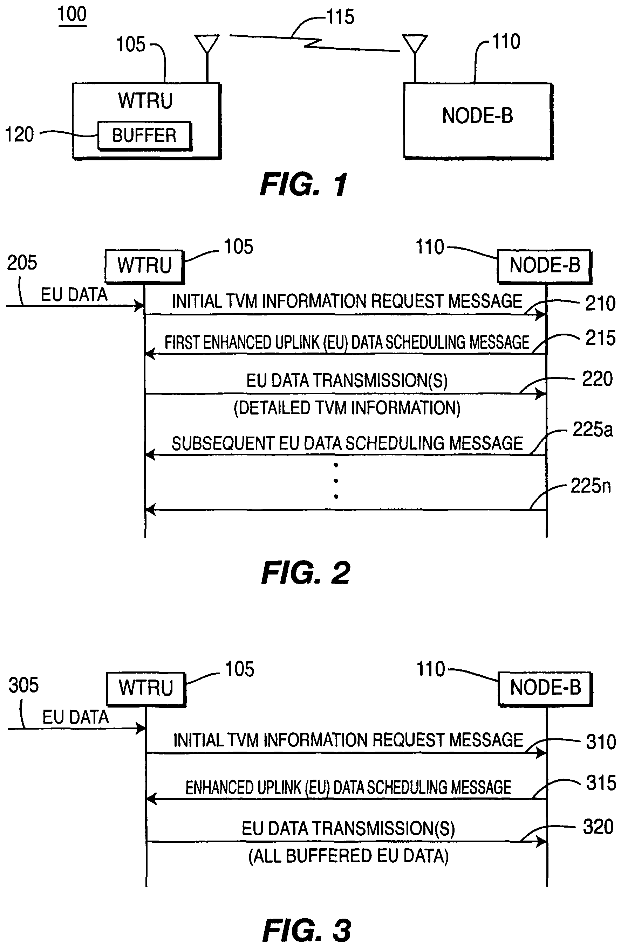

Figure 1 shows a wireless communication system 100 operating in accordance with the present invention. The system 100 includes a WTRU 105 and a Node-B 110 which communicate with each other via wireless signals 115. The WTRU 105 includes at least one buffer 120.

Figure 2 is a signal flow diagram for the wireless communication system 100 when the EU data transmissions allowed by a first EU data scheduling message are not sufficient to transmit all of the EU data stored in the buffer 120 of the WTRU 105. EU data 205 is generated at the WTRU 105 and is stored in the buffer 120 of the WTRU 105. When the quantity of the EU data in the buffer 120 exceeds an established EU data buffer threshold, the WTRU 105 sends an initial TVM information request message 210 to the Node-B 110 via an EU signaling channel. Due to the limited payload capacity of the EU signaling channel, detailed TVM information may not be included with the initial TVM information request message 210. The initial TVM information request message 210 may just indicate that the WTRU 105 has EU data ready to send, and/or may serve as a rate request to the Node-B 110 by including an approximation of the amount of EU data.

Referring still to Figure 2, upon receiving the initial TVM information request message 210, the Node-B 110 schedules one or more EU transmissions between the WTRU 105 and the Node-B 110 via a first EU data scheduling message 215. In response to receiving the first EU data scheduling message 215, the WTRU 105 sends one or more EU data transmissions 220 to the Node-B 110 allowed by the first EU data scheduling message 215. If the EU data transmissions scheduled by the Node-B 110 are not sufficient to transmit all of the EU data buffered in the WTRU 105, the WTRU 105 sends EU data transmissions 220 including detailed TVM information that indicates the approximate amount of data buffered in the WTRU 105. Optionally, the detailed TVM information may indicate an amount of buffered data associated with each associated traffic priority class or logical channel mapped to the EU dedicated channel (EU-DCH). The detailed TVM information may be multiplexed at layer 2 or layer 3 with the EU data. At layer 2, the detailed TVM information may be identified in the EU-DCH MAC header, and at layer 3 the detailed TVM information may be signaled within a radio resource control (RRC) or other equivalent L3 signaling entity. The EU data transmissions 220 may include several independent physical transmissions.

Node-B 110 can utilize the comprehensive knowledge of the TVM information and potentially associated priorities and/or logical channels reported via the EU data transmissions 220 in subsequent uplink scheduling. When the WTRU 105 obtains additional EU data later on, the WTRU 105 may choose to report updated TVM information to the Node-B 110. The Node-B 110 then schedules subsequent EU data transmissions from the WTRU 105 to the Node-B 110 via subsequent EU data scheduling messages 225a - 225n.

Figure 3 is a signal flow diagram for the wireless communication system 100 when one or more EU data transmissions allowed by an EU data scheduling message are sufficient to transmit all of the EU data stored in the buffer 120 in the WTRU 105. EU data 305 is generated at the WTRU 105 and is stored in the buffer 120 of the WTRU 105. When the quantity of the EU data in the buffer 120 exceeds an established EU data buffer threshold, the WTRU 105 sends an initial TVM information request message 310 to the Node-B 110 via an EU signaling channel.

EU data transmissions sent by the WTRU 105 are not required to be scheduled by the Node-B 110 when the established EU data buffer threshold is not exceeded.

Still referring to Figure 3, upon receiving the initial TVM information request message 310, the Node-B schedules one or more EU data transmissions between the WTRU 105 and the Node-B via an EU data scheduling message 315. In response to receiving the EU data scheduling message 315, the WTRU 105 sends one or more EU data transmissions 320 allowed by the EU data scheduling message 315. If the EU transmissions allowed by the EU data scheduling message 315 are sufficient to transmit all of the EU data buffered in the WTRU 105, all of the EU data stored in the buffer 120 of the WTRU 105 is sent to the Node-B. No additional TVM reporting is necessary since the WTRU 105 is aware that there is no additional EU data to transmit to the Node-B 110.

Data associated with priority class or logical channels/MAC-d flows associated with TVMs may be stored in the Node-B 110 to make more precise channel allocations and more efficient use of radio resources. The Node-B 110 utilizes the TVMs and associated priorities to establish subsequent EU data scheduling with greater accuracy due to the additional TVM detail provided by the WTRU 105.

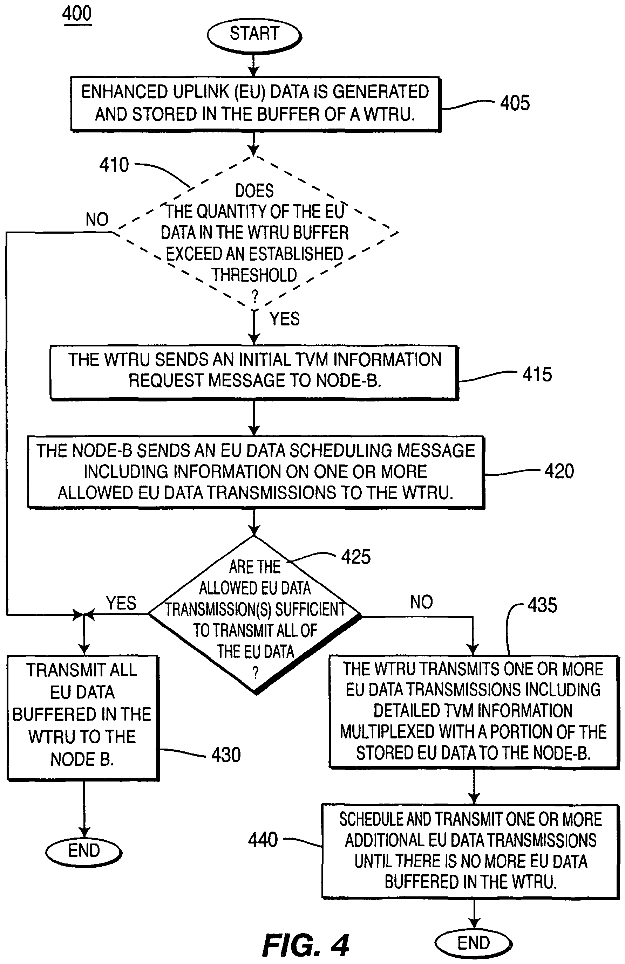

Figure 4 is a flowchart of a process 400 including method steps for transferring user data from the WTRU 105 to the Node-B 110 in accordance with the present invention. In step 405, EU data is generated and stored in the buffer 120 of the WTRU 105. In optional step 410, a determination is made as to whether or not the quantity of EU data stored in the buffer 120 of the WTRU 105 exceeds an established EU data buffer threshold. When the quantity of the stored EU data in the buffer 120 of the WTRU 105 does not exceed the established threshold, EU transmissions are allowed without Node-B scheduling, and all of the stored EU data is transmitted to the Node-B 110 (step 430). If the quantity of the stored EU data exceeds the established threshold, the WTRU 105 sends an initial TVM information request message to the Node-B 110 indicating that the WTRU 105 has EU data to send to the Node-B 110 (step 415).

It should be noted that the established EU data buffer threshold may be set to zero. In this case, the storage of any amount of EU data in the buffer 120 of the WTRU 105 will always trigger the transmission of an initial TVM information request message 210.

Still referring to Figure 4, in step 420, the Node-B 110 sends an EU data scheduling message, including information on one or more allowed EU data transmissions, to the WTRU 105 to schedule transmission of the EU data buffered in the WTRU 105 to the Node-B 110. In step 425, the WTRU 105 determines if the allowed EU data transmissions are sufficient to transmit all of the buffered EU data. If the EU data transmissions allowed by the current scheduling information are sufficient to support transmission of all of the EU data stored in the buffer 120, all of the EU data buffered in the WTRU 105 is transmitted to the Node-B 110 in the allowed EU data transmissions (step 430).

If the EU data transmissions allowed by the current scheduling information are not sufficient to transmit all of the EU data buffered in the WTRU 105, the WTRU 105 transmits one or more EU data transmissions including detailed TVM information multiplexed with a portion of the stored EU data to the Node-B 110 (step 435). In step 440, the Node-B 110 schedules and transmits one or more additional EU data transmissions until there is no more EU data buffered in the WTRU 105.

While this invention has been particularly shown and described with reference to preferred embodiments, it will be understood by those skilled in the art that various changes in form and details may be made therein without departing from the scope of the invention described hereinabove.

### Itemized list of embodiments

1. In a wireless communication system including at least one wireless transmit/receive unit (WTRU) and at least one Node-B, the WTRU including a buffer, a method comprising:
   (a) the WTRU storing enhanced uplink (EU) data in the buffer of the WTRU;
   (b) the WTRU transmitting to the Node-B an initial traffic volume measurement (TVM) information request message indicating that the WTRU has EU data to transfer to the Node-B;
   (c) in response to receiving the initial TVM information request message, the Node-B scheduling one or more allowed EU data transmissions between the WTRU and the Node-B by transmitting an EU data scheduling message to the WTRU; and
   (d) the WTRU determining whether or not the allowed EU data transmissions are sufficient to support transmission of all of the EU data stored in the buffer.
2. The method of item 1 wherein step (d) further comprises the WTRU transferring all of the EU data stored in the buffer to the Node-B if the allowed EU data transmissions are sufficient to support transmission of all of the EU data stored in the buffer.
3. The method of item 1 wherein step (d) further comprises the WTRU transmitting detailed TVM information multiplexed with at least a portion of the EU data stored in the buffer to the Node-B if the allowed EU data transmissions are not sufficient to support transmission of all of the EU data stored in the buffer.
4. The method of item 1 wherein the TVM information indicates the quantity of the stored EU data.
5. The method of item 3 wherein the detailed TVM information indicates a quantity of buffered EU data associated with each of a plurality of traffic priority classes.
6. The method of item 3 wherein the detailed TVM information is multiplexed at a layer 2 medium access control (MAC) entity.
7. The method of item 3 wherein the detailed TVM information is multiplexed at a layer 3 radio resource control (RRC) or other equivalent layer 3 signaling entity.
8. The method of item 1 further comprising:
   (e) the WTRU establishing a threshold for the quantity of the stored EU data; and
   (f) the WTRU transmitting the initial TVM information request message to the Node-B only after the quantity of the stored EU data exceeds the established threshold.
9. The method of item 1 further comprising:
   (e) the WTRU establishing a threshold for the quantity of the stored EU data; and
   (f) when the established threshold is not exceeded, the WTRU transferring all of the stored EU data from the buffer of the WTRU to the Node-B without requiring scheduling information from the Node-B.
10. The method of item 1 further comprising:
   (e) the WTRU establishing a threshold for the quantity of the stored EU data;
   (f) setting the established threshold to a value of zero; and
   (g) the WTRU transferring all of the stored EU data from the buffer of the WTRU to the Node-B only after receiving scheduling information from the Node-B.
11. In a wireless communication system including at least one wireless transmit/receive unit (WTRU) and at least one Node-B, the WTRU including a buffer, a method comprising:
   (a) the WTRU storing enhanced uplink (EU) data in the buffer of the WTRU;
   (b) the WTRU establishing a threshold for the quantity of the stored EU data;
   (c) if the quantity of the stored EU data exceeds the established threshold, the WTRU transmitting to the Node-B an initial traffic volume measurement (TVM) information request message indicating that the WTRU has EU data to transfer to the Node-B and requires scheduling information; and
   (d) if the quantity of the stored EU data does not exceed the established threshold, the WTRU transferring all of the stored EU data from the buffer of the WTRU to the Node-B without the WTRU requiring scheduling information from the Node-B.
12. In a wireless communication system including at least one wireless transmit/receive unit (WTRU) and at least one Node-B, the WTRU including a buffer, a method comprising:
   (a) the WTRU storing enhanced uplink (EU) data in the buffer of the WTRU;
   (b) establishing a threshold for the quantity of the stored EU data; and
   (c) if the established threshold is set to zero, the WTRU transmitting to the Node-B an initial traffic volume measurement (TVM) information request message indicating that the WTRU has EU data to transfer to the Node-B and requires scheduling information.
13. In a wireless communication system including at least one wireless transmit/receive unit (WTRU) and at least one Node-B, the WTRU including a buffer, a method comprising:
   (a) the WTRU storing enhanced uplink (EU) data in the buffer of the WTRU;
   (b) the Node-B scheduling one or more allowed EU data transmissions between the WTRU and the Node-B by transmitting an EU data scheduling message to the WTRU; and
   (c) the WTRU transferring all of the EU data stored in the buffer to the Node-B when the allowed EU data transmissions are sufficient to support transmission of all of the EU data stored in the buffer.
14. In a wireless communication system including at least one wireless transmit/receive unit (WTRU) and at least one Node-B, the WTRU including a buffer, a method comprising:
   (a) the WTRU storing enhanced uplink (EU) data in the buffer of the WTRU;
   (b) the Node-B scheduling one or more allowed EU data transmissions between the WTRU and the Node-B by transmitting an EU data scheduling message to the WTRU; and
   (c) the WTRU transmitting a portion of the EU data stored in the buffer along with detailed traffic volume measurement (TVM) information to the Node-B when the allowed EU data transmissions are not sufficient to support transmission of all of the EU data stored in the buffer.
15. In a wireless communication system including at least one wireless transmit/receive unit (WTRU) and at least one Node-B, the WTRU including a buffer, a method comprising:
   (a) the WTRU storing enhanced uplink (EU) data in the buffer of the WTRU; and
   (b) the WTRU transmitting at least a portion of the stored EU data multiplexed with detailed traffic volume measurement (TVM) information to the Node-B.
16. In a wireless communication system including at least one wireless transmit/receive unit (WTRU) and at least one Node-B, the WTRU including a buffer, a method comprising:
   (a) the WTRU storing enhanced uplink (EU) data in the buffer of the WTRU;
   (b) the WTRU establishing a threshold for the quantity of the stored EU data; and
   (c) if the quantity of the stored EU data does not exceed the established threshold, the WTRU transmitting to the Node-B at least a portion of the stored EU data multiplexed with detailed traffic volume measurement (TVM) information.
17. A wireless communication system comprising:
   (a) at least one wireless transmit/receive unit (WTRU) including a buffer; and
   (b) at least one Node-B, wherein:
      (i) enhanced uplink (EU) data is stored in the buffer of the WTRU;
      (ii) the WTRU transmits to the Node-B an initial traffic volume measurement (TVM) information request message indicating that the WTRU has EU data to transfer to the Node-B;
      (iii) in response to receiving the initial traffic volume measurement (TVM) information request message, the Node-B schedules one or more allowed EU data transmissions between the WTRU and the Node-B by transmitting an EU data scheduling message to the WTRU; and
      (iv) the WTRU determines whether or not the allowed EU data transmissions are sufficient to support transmission of all of the EU data stored in the buffer.
18. The system of item 17 wherein, if the allowed EU data transmissions are sufficient to support transmission of all of the EU data stored in the buffer, the WTRU transfers all of the EU data stored in the buffer to the Node-B.
19. The system of item 17 wherein, if the allowed EU data transmissions are not sufficient to support transmission of all of the EU data stored in the buffer, the WTRU transmits detailed TVM information multiplexed with at least a portion of the EU data stored in the buffer to the Node-B.
20. The system of item 17 wherein the TVM information indicates the quantity of the stored EU data.
21. The system of item 19 wherein the detailed TVM information indicates a quantity of buffered EU data associated with each of a plurality of traffic priority classes.
22. The system of item 19 wherein the detailed TVM information is multiplexed at a layer 2 medium access control (MAC) entity.
23. The system of item 19 wherein the detailed TVM information is multiplexed at a layer 3 radio resource control (RRC) or other equivalent layer 3 signaling entity.
24. The system of item 17 wherein a threshold is established for the quantity of the stored EU data, and the initial TVM information request message is sent to the Node-B only after the quantity of the stored EU data exceeds the established threshold.
25. The system of item 17 wherein a threshold is established for the quantity of the stored EU data, and all of the stored EU data is transferred from the buffer of the WTRU to the Node-B without requiring scheduling information from the Node-B, when the established threshold is not exceeded.
26. The system of item 17 wherein a threshold is established for the quantity of the stored EU data, and transmissions of the stored EU data are always scheduled by the Node-B when the established threshold is set to zero.
27. A wireless communication system comprising:
   (a) at least one wireless transmit/receive unit (WTRU) including a buffer; and
   (b) at least one Node-B, wherein:
      (i) enhanced uplink (EU) data is stored in the buffer of the WTRU;
      (ii) a threshold is established for the quantity of the stored EU data;
      (iii) if the quantity of the stored EU data exceeds the established threshold, the WTRU transmits to the Node-B an initial traffic volume measurement (TVM) information request message indicating that the WTRU has EU data to transfer to the Node-B and requires scheduling information; and
      (iv) if the quantity of the stored EU data does not exceed the established threshold, the WTRU transfers all of the stored EU data from the buffer of the WTRU to the Node-B without the WTRU requiring scheduling information from the Node-B.
28. A wireless communication system comprising:
   (a) at least one wireless transmit/receive unit (WTRU) including a buffer; and
   (b) at least one Node-B, wherein:
      (i) enhanced uplink (EU) data is stored in the buffer of the WTRU;
      (ii) a threshold is established for the quantity of the stored EU data; and
      (iii) if the established threshold is set to zero, the WTRU transmits to the Node-B an initial traffic volume measurement (TVM) information request message indicating that the WTRU has EU data to transfer to the Node-B and requires scheduling information.
29. A wireless communication system comprising:
   (a) at least one wireless transmit/receive unit (WTRU) including a buffer; and
   (b) at least one Node-B, wherein:
      (i) enhanced uplink (EU) data is stored in the buffer of the WTRU;
      (ii) an EU data scheduling message is transmitted from the Node-B to the WTRU to schedule one or more allowed EU data transmissions between the WTRU and the Node-B; and
      (iii) all of the EU data stored in the buffer of the WTRU is transferred to the Node-B when the allowed EU data transmissions are sufficient to support transmission of all of the EU data stored in the buffer.
30. A wireless communication system comprising:
   (a) at least one wireless transmit/receive unit (WTRU) including a buffer; and
   (b) at least one Node-B, wherein:
      (i) enhanced uplink (EU) data is stored in the buffer of the WTRU;
      (ii) an EU data scheduling message is transmitted from the Nod-B to the WTRU to schedule one or more allowed EU data transmissions between the WTRU and the Node-B; and
      (iii) at least a portion of the EU data stored in the buffer is transmitted along with detailed traffic volume measurement (TVM) information to the Node-B when the allowed EU data transmissions are not sufficient to support transmission of all of the EU data stored in the buffer.
31. A wireless communication system comprising:
   (a) at least one wireless transmit/receive unit (WTRU) including a buffer; and
   (b) at least one Node-B, wherein:
      (i) enhanced uplink (EU) data is stored in the buffer of the WTRU; and
      (ii) at least a portion of the stored EU data multiplexed with detailed traffic volume measurement. (TVM) information is transmitted from the WTRU to the Node-B.
32. A wireless transmit/receive unit (WTRU) comprising:
   (a) a buffer;
   (b) means for storing enhanced uplink (EU) data in the buffer;
   (c) means for transmitting an initial traffic volume measurement (TVM) information request message indicating that the WTRU has EU data waiting to transmit;
   (d) means for receiving an EU data scheduling message used by the WTRU to schedule one or more allowed EU data transmissions from the WTRU; and
   (e) means for determining whether or not the allowed EU data transmissions are sufficient to support transmission of all of the EU data stored in the buffer.
33. The WTRU of item 32 wherein, if the allowed EU data transmissions are sufficient to support transmission of all of the EU data stored in the buffer, the WTRU transmits all of the EU data stored in the buffer.
34. The WTRU of item 32 wherein, if the allowed EU data transmissions are not sufficient to support transmission of all of the EU data stored in the buffer, the WTRU transmits detailed TVM information multiplexed with at least a portion of the EU data stored in the buffer to the Node-B.
35. The WTRU of item 32 wherein the TVM information indicates the quantity of the stored EU data.
36. The WTRU of item 34 wherein the detailed TVM information indicates a quantity of buffered EU data associated with each of a plurality of traffic priority classes.
37. The WTRU of item 34 wherein the detailed TVM information is multiplexed at a layer 2 medium access control (MAC) entity.
38. The WTRU of item 34 wherein the detailed TVM information is multiplexed at a layer 3 radio resource control (RRC) or other equivalent layer 3 signaling entity.
39. The WTRU of item 32 wherein a threshold is established for the quantity of the stored EU data, and the initial TVM information request message is transmitted only after the quantity of the stored EU data exceeds the established threshold.
40. The WTRU of item 32 wherein a threshold is established for the quantity of the stored EU data, and all of the stored EU data is transferred from the buffer of the WTRU without requiring scheduling information, when the established threshold is not exceeded.
41. The WTRU of item 32 wherein a threshold is established for the quantity of the stored EU data, and transmissions of the stored EU data are always scheduled when the established threshold is set to zero.
42. An integrated circuit (IC) comprising:
   (a) a buffer;
   (b) means for storing enhanced uplink (EU) data in the buffer;
   (c) means for transmitting an initial traffic volume measurement (TVM) information request message indicating that the IC has EU data waiting to transmit;
   (d) means for receiving an EU data scheduling message used by the IC to schedule one or more allowed EU data transmissions from the IC; and
   (e) means for determining whether or not the allowed EU data transmissions are sufficient to support transmission of all of the EU data stored in the buffer.
43. The IC of item 42 wherein, if the allowed EU data transmissions are sufficient to support transmission of all of the EU data stored in the buffer, the IC transmits all of the EU data stored in the buffer.
44. The IC of item 42 wherein, if the allowed EU data transmissions are not sufficient to support transmission of all of the EU data stored in the buffer, the IC transmits detailed TVM information multiplexed with at least a portion of the EU data stored in the buffer.
45. The IC of item 42 wherein the TVM information indicates the quantity of the stored EU data.
46. The IC of item 44 wherein the detailed TVM information indicates a quantity of buffered EU data associated with each of a plurality of traffic priority classes.
47. The IC of item 44 wherein the detailed TVM information is multiplexed at a layer 2 medium access control (MAC) entity.
48. The IC of item 44 wherein the detailed TVM information is multiplexed at a layer 3 radio resource control (RRC) or other equivalent layer 3 signaling entity.
49. The IC of item 42 wherein a threshold is established for the quantity of the stored EU data, and the initial TVM information request message is transmitted only after the quantity of the stored EU data exceeds the established threshold.
50. The IC of item 42 wherein a threshold is established for the quantity of the stored EU data, and all of the stored EU data is transferred from the buffer of the IC without requiring scheduling information, when the established threshold is not exceeded.
51. The IC of item 42 wherein a threshold is established for the quantity of the stored EU data, and transmissions of the stored EU data are always scheduled when the established threshold is set to zero.

## Claims

1. A method for use by a wireless transmit/receive unit (105), WTRU, for uplink transmission, the method being **characterized by**:
transmitting (210, 310), to a Node-B, a first type message, a second type message, and a third type message;
wherein the first type message indicates that the WTRU has uplink buffered data (205, 305) to transmit and the WTRU requires uplink resources for transmission of the uplink buffered data;
wherein the second type message includes a plurality of indications, wherein each indication indicates an amount of uplink buffered data associated with at least one priority;
wherein the third type message indicates an amount of uplink buffered data and has less information than the second type message;
receiving (215, 315), in response to the transmitted first type message, the transmitted second type message, or the transmitted third type message, information that indicates a grant of an uplink data transmission; and
transmitting (220, 320) uplink data over an uplink channel based on the received information.

2. The method of claim 1, further comprising multiplexing the second type message with uplink data.

3. The method of claim 2, wherein the second type message is multiplexed with uplink data at a medium access control, MAC, layer.

4. The method of claim 1 wherein the priority is associated with traffic data.

5. A wireless transmit/receive unit (105), WTRU, **characterized in that** the WTRU comprises:
means for transmitting (210, 310), to a Node-B,
a first type message, a second type message, and a third type message;
wherein the first type message indicates that the WTRU has uplink buffered data (205, 305) to transmit and the WTRU requires uplink resources for transmission of the uplink buffered data;
wherein the second type message includes a plurality of indications, wherein each indication indicates an amount of uplink buffered data associated with at least one priority;
wherein the third type message indicates an amount of uplink buffered data and has less information than the second type message;
means for receiving (215, 315), in response to the transmitted first type message, the transmitted second type message, or the transmitted third type message, information that indicates a grant of an uplink data transmission; and
means for transmitting
(220, 320) uplink data over an uplink channel based on the received information.

6. The method of claim 1 wherein the uplink data is transmitted over a plurality of physical channels.

7. The method of claim 1 further comprising multiplexing the third type message with uplink data.

8. The method of claim 7 wherein the third type message is multiplexed with uplink data at a medium access control, MAC, layer.

9. The method of claim 4 wherein the traffic data is logical channel data.

10. The WTRU of claim 5 wherein the uplink data is transmitted over a plurality of physical channels.

11. The WTRU of claim 5 wherein the second type message is multiplexed with uplink data.

12. The WTRU of claim 11 wherein the second type message is multiplexed with uplink data at a medium access control, MAC, layer.

13. The WTRU of claim 5 wherein the third type message is multiplexed with uplink data.

14. The WTRU of claim 13 wherein the third type message is multiplexed with uplink data at a medium access control, MAC, layer.

15. The WTRU of claim 5 wherein the priority is associated with traffic data.

16. The WTRU of claim 15 wherein the traffic data is logical channel data.

## Patentansprüche

1. Verfahren zur Verwendung durch eine Drahtlos-Sende- und - Empfangseinheit (Wireless Transmit/Receive Unit, WTRU) (105) für eine Uplink-Übertragung, wobei das Verfahren **gekennzeichnet ist durch**:
Senden (210, 310), an einen Node-B, einer Nachricht der ersten Art, einer Nachricht der zweiten Art und einer Nachricht der dritten Art;
wobei die Nachricht der ersten Art anzeigt, dass die WTRU gepufferte Uplink-Daten (205, 305) zu senden hat und die WTRU Uplink-Ressourcen zum Übertragen der gepufferten Uplink-Daten benötigt;
wobei die Nachricht der zweiten Art mehrere Hinweise enthält, wobei jeder Hinweis einen Betrag von gepufferten Uplink-Daten anzeigt, denen mindestens eine Priorität zugeordnet ist;
wobei die Nachricht der dritten Art einen Betrag von gepufferten Uplink-Daten anzeigt und weniger Informationen als die Nachricht der zweiten Art hat;
Empfangen (215, 315), in Reaktion auf die gesendete Nachricht der ersten Art, von Informationen der gesendeten Nachricht der zweiten Art, oder der gesendeten Nachricht der dritten Art, die eine Freigabe einer Uplink-Datenübertragung anzeigen; und
Senden (220, 320) von Uplink-Daten über einen Uplink-Kanal auf der Basis der empfangenen Informationen.

2. Verfahren nach Anspruch 1, das des Weiteren das Multiplexieren der Nachricht der zweiten Art mit Uplink-Daten umfasst.

3. Verfahren nach Anspruch 2, wobei die Nachricht der zweiten Art mit Uplink-Daten in einer Media Access Control (MAC)-Schicht multiplexiert wird.

4. Verfahren nach Anspruch 1, wobei die Priorität mit Verkehrsdaten verknüpft ist.

5. Drahtlos-Sende- und -Empfangseinheit (Wireless Transmit/Receive Unit, WTRU) (105), **dadurch gekennzeichnet, dass** die WTRU Folgendes umfasst:
ein Mittel zum Senden (210, 310), an einen Node-B, einer Nachricht einer ersten Art, einer Nachricht einer zweiten Art und einer Nachricht einer dritten Art;
wobei die Nachricht der ersten Art anzeigt, dass die WTRU gepufferte Uplink-Daten (205, 305) zu senden hat und die WTRU Uplink-Ressourcen zum Übertragen der gepufferten Uplink-Daten benötigt;
wobei die Nachricht der zweiten Art mehrere Hinweise enthält, wobei jeder Hinweis einen Betrag von gepufferten Uplink-Daten anzeigt, denen mindestens eine Priorität zugeordnet ist;
wobei die Nachricht der dritten Art einen Betrag von gepufferten Uplink-Daten anzeigt und weniger Informationen als die Nachricht der zweiten Art hat;
ein Mittel zum Empfangen (215, 315), in Reaktion auf die gesendete Nachricht der ersten Art, von Informationen der gesendeten Nachricht der zweiten Art, oder der gesendeten Nachricht der dritten Art, die eine Freigabe einer Uplink-Datenübertragung anzeigen; und
ein Mittel zum Senden (220, 320) von Uplink-Daten über einen Uplink-Kanal auf der Basis der empfangenen Informationen.

6. Verfahren nach Anspruch 1, wobei die Uplink-Daten über mehrere physische Kanäle gesendet werden.

7. Verfahren nach Anspruch 1, das des Weiteren das Multiplexieren der Nachricht der dritten Art mit Uplink-Daten umfasst.

8. Verfahren nach Anspruch 7, wobei die Nachricht der dritten Art mit Uplink-Daten einer Media Access Control (MAC)-Schicht multiplexiert wird.

9. Verfahren nach Anspruch 4, wobei die Verkehrsdaten Logikkanaldaten sind.

10. WTRU nach Anspruch 5, wobei die Uplink-Daten über mehrere physische Kanäle gesendet werden.

11. WTRU nach Anspruch 5, wobei die Nachricht der zweiten Art mit Uplink-Daten multiplexiert wird.

12. WTRU nach Anspruch 11, wobei die Nachricht der zweiten Art mit Uplink-Daten einer Media Access Control (MAC)-Schicht multiplexiert wird.

13. WTRU nach Anspruch 5, wobei die Nachricht der dritten Art mit Uplink-Daten multiplexiert wird.

14. WTRU nach Anspruch 13, wobei die Nachricht der dritten Art mit Uplink-Daten einer Media Access Control (MAC)-Schicht multiplexiert wird.

15. WTRU nach Anspruch 5, wobei die Priorität mit Verkehrsdaten verknüpft ist.

16. WTRU nach Anspruch 15, wobei die Verkehrsdaten Logikkanaldaten sind.

## Revendications

1. Procédé à utiliser par une unité d'émission/réception sans fil (105), WTRU, pour une transmission en liaison montante, le procédé étant **caractérisé par**:
transmettre (210, 310), à un noeud B, un premier type de message, un second type de message et un troisième type de message;
dans lequel le premier type de message indique que la WTRU a des données de liaison montante mises en mémoire tampon (205, 305) à transmettre et la WTRU nécessite des ressources de liaison montante pour la transmission des données de liaison montante mises en mémoire tampon ;
dans lequel le second type de message inclut une pluralité d'indications dans lequel chaque indication indique une quantité de données de liaison montante mises en mémoire tampon associées à au moins une priorité;
dans lequel le troisième type de message indique une quantité de données de liaison montante mises en mémoire tampon et comporte moins d'informations que le second type de message;
recevoir (215, 315), en réponse au premier type de message transmis, au second type de message transmis ou au troisième type de message transmis, une information qui indique une autorisation de transmission de données en liaison montante et
transmettre (220, 320) des données de liaison montante via un canal de liaison montante sur la base de l'information reçue.

2. Procédé selon la revendication 1, comprenant en outre de multiplexer le second type de message avec des données de liaison montante.

3. Procédé selon la revendication 2, dans lequel le second type de message est multiplexé avec des données de liaison montante au niveau d'une couche de commande d'accès au support MAC.

4. Procédé selon la revendication 1, dans lequel la priorité est associée aux données de trafic.

5. Unité d'émission/réception sans fil (105), WTRU, **caractérisé en ce que** la WTRU comprend:
un moyen pour transmettre (210, 310) à un noeud B, un premier type de message, un second type de message et un troisième type de message;
dans lequel le premier type de message indique que la WTRU a des données de liaison montante mises en mémoire tampon (205, 305) à transmettre et la WTRU nécessite des ressources de liaison montante pour la transmission des données de liaison montante mises en mémoire tampon ;
dans lequel le second type de message inclut une pluralité d'indications, dans lequel chaque indication indique une quantité de données de liaison montante mises en mémoire tampon associées à au moins une priorité;
dans lequel le troisième type de message indique une quantité de données de liaison montante mises en mémoire tampon et comporte moins d'informations que le second type de message;
un moyen pour recevoir (215,315), en réponse au premier type de message transmis, au second type de message transmis ou au troisième type de message transmis, une information qui indique une autorisation de transmission de données en liaison montante et
un moyen pour transmettre (220,320) des données de liaison montante via un canal de liaison montante sur la base de l'information reçue.

6. Procédé selon la revendication 1, dans lequel les données de liaison montante sont transmises via une pluralité des canaux physiques.

7. Procédé selon la revendication 1, comprenant en outre de multiplexer le troisième type de message avec des données de liaison montante.

8. Procédé selon la revendication 7, dans lequel le troisième type de message est multiplexé avec des données de liaison montante au niveau d'une couche de commande d'accès au support, MAC.

9. Procédé selon la revendication 4, dans lequel les données de trafic sont des données de canal logique.

10. WTRU selon la revendication 5, dans laquelle les données de liaison montante sont transmises via une pluralité de canaux physiques.

11. WTRU selon la revendication 5, dans laquelle le second type de message est multiplexé avec des données de liaison montante.

12. WTRU selon la revendication 11, dans laquelle le second type de message est multiplexé avec des données de liaison montante au niveau d'une couche de commande d'accès au support MAC.

13. WTRU selon la revendication 5, dans laquelle le troisième type de message est multiplexé avec des données de liaison montante.

14. WTRU selon la revendication 13, dans laquelle le troisième type de message est multiplexé avec des données de liaison montante au niveau d'une couche de commande d'accès au support MAC.

15. WTRU selon la revendication 5, dans laquelle la priorité est associée aux données de trafic.

16. WTRU selon la revendication 15, dans laquelle les données de trafic sont des données de canal logique.
